# EUROPEAN PATENT APPLICATION

(11) **EP 1 176 594 A1**
(43) Date of publication of application: **30.01.2002**
(21) Application number: 01118173.2
(22) Date of filing: 26.07.2001
(51) Int. Cl.: G11B 27/10, G11B 19/12, G11B 27/11, G11B 20/10, H04H 5/00, H04S 3/00, G11B 27/34, G11B 33/10

(54) **Audio reproducing apparatus**

(30) Priority: 27.07.2000 JP 2000226718
(71) Applicant: Pioneer Corporation, Meguro-ku, Tokyo (JP)
(72) Inventor: Murata, Toshiyuki, c/oKawagoe Koujou, Kawagoe-shi, Saitama-ken 350-8555 (JP); Sato, Hitoshi, c/oKawagoe Koujou, Kawagoe-shi, Saitama-ken 350-8555 (JP); Yamashita, Rie, c/oKawagoe Koujou, Kawagoe-shi, Saitama-ken 350-8555 (JP); Mizumura, Yukari, c/oKawagoe Koujou, Kawagoe-shi, Saitama-ken 350-8555 (JP); Morita, Kenji, c/oKawagoe Koujou, Kawagoe-shi, Saitama-ken 350-8555 (JP)
(74) Representative: Popp, Eugen, Dr.

(57) **Abstract**

An attribute of each audio stream is inspected by a discriminator (14). The frequency character of a frequency character adjustor (11) is automatically adjusted corresponding to an attribute of each discriminated audio stream, thereby obtaining an appropriate sound field for each selected audio stream.

## Description

### BACKGROUND OF THE INVENTION

### Field of the Invention

The present invention relates to an audio reproducing apparatus for reproducing audio stream recorded in an information recording medium, particularly to an audio reproducing apparatus capable of automatically setting reproduction frequency character and the like in accordance with an attribute information of an audio stream.

The Present application claims priority from Japanese Application No.2000-226718, the disclosure of which is incorporated herein by reference for all purposes.

### Description of the Related Prior Art

Recently, information recording mediums corresponding to various multi-media such as CD (Compact Disk) and DVD (Digital Video Disk or Digital Versatile Disk) are in spreading so that they have become part of people's daily life. Meanwhile, various audio reproducing apparatuses for reproducing informations recorded in such information recording mediums, have been made possible to process (in various manners) audio informations in order for a user to enjoy his or her selected music in his or her desired sound field.

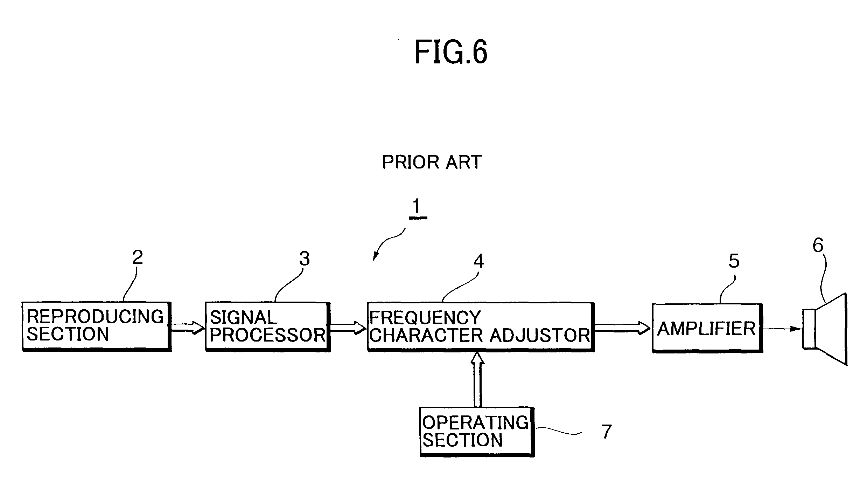

Fig. 6 is a block diagram showing one example of a conventional audio reproducing apparatus equipped with multiple functions.

As shown in Fig. 6, the conventional audio reproducing apparatus 1 comprises a reproducing section 2 for optically reproducing data recorded in DVD, a signal processor 3 for reproducing audio data by separating an audio stream from the optically reproduced data and demodulating as well as decoding the audio stream, a frequency character adjuster 4 for adjusting the frequency character of an audio data, an amplifier 5 for converting the audio signal (whose frequency character has been adjusted) into analogue audio signal and amplifying and then supplying the signal to a speaker 6, and an operating section 7 enabling a user to designate a desired frequency character and sending a related command to the frequency character adjustor 4.

The operating section 7 is provided with a plurality of selecting buttons (not shown) for selecting and designating a frequency character suitable for listening a desired music (such as 2-channel audio and 5.1-channel movies).

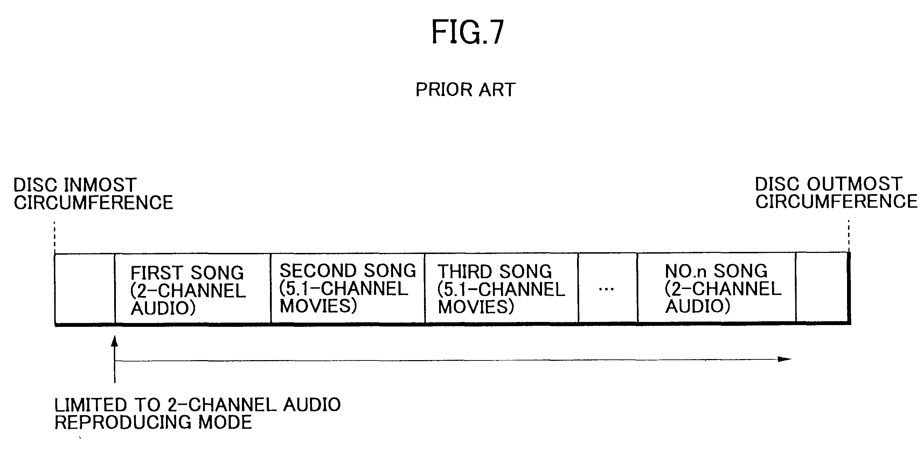

When a user inserts a DVD (which has recorded therein a plurality of songs schematically shown in Fig. 7) into the reproducing section 2, he or she can operate the selecting buttons of the operating section 7 to designate a sound field character (frequency character) suitable for enjoying a music of (for example) 2-channel audio. At this time, the frequency character adjustor 4 performs a digital operation for obtaining an acoustic effect for use with 2-channel audio, with respect to the audio data fed from the signal processor 3. In this manner, the reproduced sound having an acoustic effect (for use with 2-channel audio) can be produced from the speaker 6.

In this way, when a first song shown in Fig. 7 is a music of 2-channel audio, a user can designate his or her desired frequency character suitable for enjoying a music of 2-channel audio, so that he or she can enjoy the first song in a desired sound field environment as if he or she is enjoying a live performance.

However, in use of the above-described conventional audio reproducing apparatus, when a user designates a specified frequency and operates the apparatus to reproduce a DVD (which has recorded therein a plurality of songs), even if the plurality of songs are related to different music contents (such as 2-channel audio and 5.1-channel movies, as shown in Fig. 7), the plurality of songs will all be undesirably reproduced by the user's designated frequency. As a result, it is impossible to ensure a desired sound field which enables a user to obtain a feeling as if he or she is enjoying a live performance.

Namely, if a user selects a first song of 2-channel audio and then designates a frequency character suitable for enjoying a music of 2-channel audio, a second song and a third song of 5.1-channel movies can not be reproduced under a frequency character suitable for enjoying a music of 5.1-channel movies, but will be undesirably reproduced under the frequency character for use with 2-channel audio, thereby making it impossible to ensure a sound field environment which enables a user to obtain a feeling as if he or she is enjoying a live performance.

Further, in using the above-described conventional audio reproducing apparatus, a user is allowed to preset in advance a frequency character in order to obtain a desired sound field for each song. This, however, makes it necessary to monitor a plurality of songs recorded in a recording medium, and to preset in advance a frequency character suitable for reproducing each desired song, thus forming a troublesome operation for the user.

Moreover, when it is required to successively reproduce a plurality of DVDs, each time a user replaces one DVD with another DVD, he or she has to perform the aforementioned monitoring and preset in advance a frequency character suitable for reproducing each desired song, thus also forming a troublesome operation.

In addition, if a conventional apparatus is an audio reproducing apparatus equipped with an auto-changer capable of receiving a plurality of DVDs, such an apparatus usually has a random selecting function for randomly reproducing several optional songs from the plurality of DVDs. However, when a user designates the random selecting function to reproduce a plurality of songs, it is also necessary to monitor a plurality of songs and to preset in advance a frequency character for each song, thus similarly forming a troublesome operation.

### SUMMARY OF THE INVENTION

An object of the present invention is to provide an improved audio reproducing apparatus which can overcome the aforementioned problems so as to ensure a desired sound field environment for each song.

According to the present invention, there is provided an audio reproducing apparatus comprising: audio reproducing device for reproducing audio information; discriminating device for discriminating sound stream contained in the audio information; storing device for storing frequency character information set corresponding to the sound stream; renewing device for renewing the frequency character information; and control device which can perform a control so that the renewing device can be changed in accordance with a frequency character corresponding to a sound stream discriminated by the discriminating device, and that the audio reproducing device can output an audio information.

The audio reproducing apparatus of the present invention further comprises: character storing device for storing a plurality of frequency character informations; and selecting device for selecting a sound field corresponding to frequency character information stored in the character storing device. In particular, the control device is provided such that a sound field selected by the selecting device is stored in the character storing device, corresponding to a sound stream.

In using the audio reproducing apparatus of the present invention, an attribute of each audio stream is inspected and a sound field suitable for this attribute is set, thereby effecting a desired audio reproduction. Therefore, it becomes possible to provide a user with a sound field environment suitable for a selected audio stream. Further, even if an appropriate sound field is not set in advance for each audio stream, it is possible to automatically discriminate an attribute of each audio stream so as to automatically set an appropriate sound field suitable for a selected audio stream. As a result, a user is allowed not to perform a troublesome operation, thereby ensuring an improved convenience.

### BRIEF DESCRIPTION OF THE DRAWINGS

These and other objects and advantages of the present invention will become clear from the following description with reference to the accompanying drawings, wherein:
Fig. 1 is a block diagram showing the constitution of an audio reproducing apparatus formed according to the present invention.
Fig. 2 is a schematic view showing the data constitution of audio stream attribute table VTS-AST-ATAT in DVD-ROM.
Fig. 3 shows the constitution of standard data recording area.
Fig. 4 shows a procedure for storing renewal data in a renewal data recording area.
Fig. 5 is a flow chart showing an operation of the audio reproducing apparatus formed according to the present invention.
Fig. 6 is a block diagram showing a conventional audio reproducing apparatus.
Fig. 7 is a view showing the problems existing in a conventional audio reproducing apparatus.

### DETAILED DESCRIPTION OF THE PREFERRED EMBODIMENT

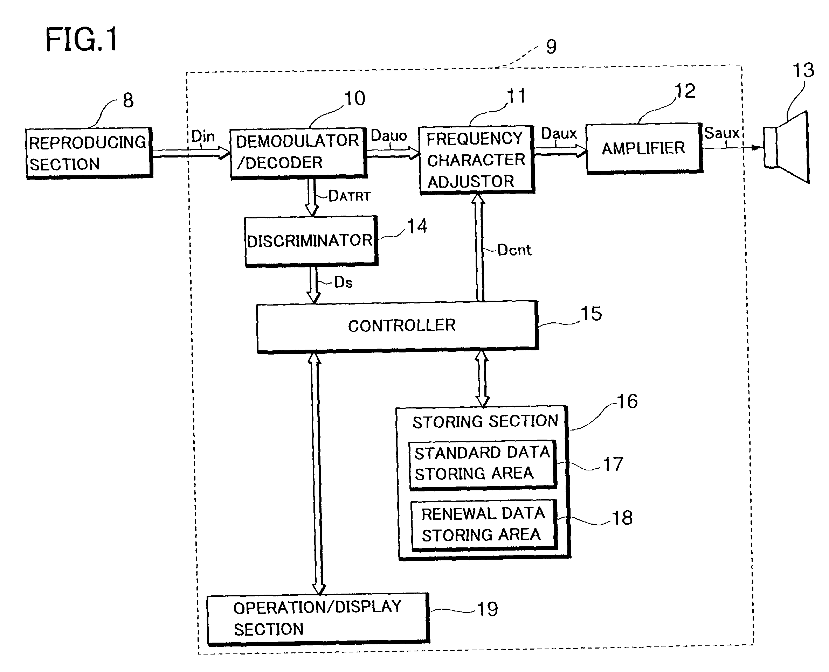

One embodiment for carrying out the present invention will be described in detail below with reference to the accompanying drawings. Fig. 1 is a block diagram showing the constitution of an audio reproducing apparatus formed according to the present embodiment.

As shown in Fig. 1, the audio reproducing apparatus comprises a reproducing section 8 for optically reproducing information data recorded in an information recording medium such as CD or DVD, a signal processor 9 for processing information data Din reproduced by the reproducing section 8 and for producing an analogue audio signal Saux. The analogue audio signal Saux is then supplied to a speaker 13 so as to produce the reproduced sound.

The audio reproducing apparatus may be so formed that the reproducing section 8 and the signal processor 9 are enclosed within the same identical housing, or may be alternatively formed in a manner such that the reproducing section 8 and the signal processor 9 are located separately in different special positions in connection with each other so as to form a system component arrangement. At this time, another reproducing apparatus having all the functions of the reproducing section 8 may be connected to the signal processor 9.

The signal processor 9 comprises a demodulator/decoder 10, a frequency character adjustor 11, an amplifier 12, a discriminator 14, a controller 15, a storing section 16, an operation/display section 19. The storing section 16 contains a standard data storing area and a renewal data storing area 18.

The demodulator/decoder 10 is provided to demodulate the data Din optically reproduced by the reproducing section 8, to separate an audio stream (or can be referred to as sound stream) from the demodulated data, to decode the audio stream so as to produce the original audio data Dauo to be supplied to the frequency character adjustor 11. Further, the demodulator/decoder 10 is adapted to separate a attribute data DATRT (indicating an attribute of an audio stream) from the demodulated data and supply the attribute data DATRT to the discriminator 14.

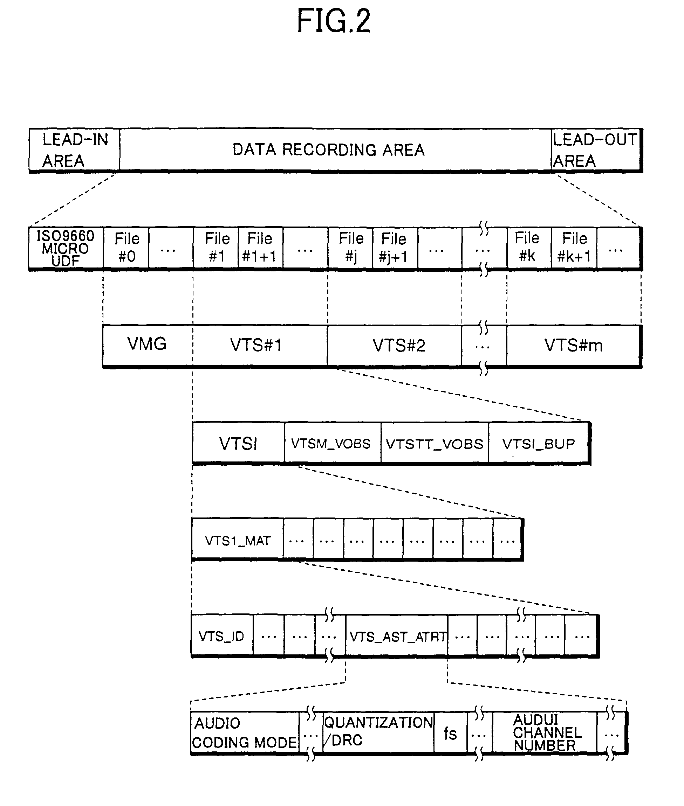

Here, the attribute data DATRT is recorded in advance in CD or DVD for each audio stream. Fig. 2 is used to show, as a typical example, the constitution of attribute data DATRT to be recorded in DVD-ROM.

As shown in Fig. 2, the data recording area of the DVD-ROM is divided into a plurality of files in which there have been recorded a micro UDF (Universal Disk Format), a logical format in accordance with ISO 9660, VMG (Video Manager), one or more VTS (Video Title Set) indicating a group of titles having the same attribute.

Each of the video title sets VTS#1 - VTS#m includes a control data VTSI, menu indication video object set VTSM-VOBS, title indication video object set VTSTT-VOBS, and backup data VTSI-BUP.

The control data VTSI comprises a plurality of data tables such as video title set information management table VTS1-MAT. The video title set information management table VTS1-MAT comprises video title set identification data VTS-ID and audio stream attribute table VTS-AST-ATRT. The audio stream attribute table VTS-AST-ATRT indicates the attribute of the audio stream of the video title set.

In detail, the audio stream attribute table VTS-AST-ATRT comprises ACM (Audio Coding Mode), Quantization/DRC, sampling frequency fs, number of audio channels. A maker of DVD-ROM can record these data so as to set an attribute for each audio stream.

For example, as an audio coding mode, it is allowed to selectively record AC-3, MPEG-1, MPEG-2 and linear PCM audio. As Quantization/DRC, it is allowed to selectively record a quantization of audio data such as 16 bits, 20 bits and 24 bits. As a sampling frequency fs, it is allowed to selectively record 48 kHz or 96 kHz. As the number of audio channels, it is allowed to selectively record not only monoral and 2 channels, but also 3 or more audio channels (multi-channels) such as 5.1 channels of Dolby digital system and 7.1 channels of MPEG-2 system.

When DVD-ROM is reproduced, the demodulator/decoder 10 separates, as an attribute data DATRT, the audio stream attribute table VTS-AST-ATRT indicating an attribute of each audio stream, and then supplies the data to the discriminator 14.

When other sort of information recording medium is reproduced, the demodulator/decoder 10 separates an attribute data DATRT of each audio stream recorded in accordance with the same logical data constitution as the DVD-ROM, and then supplies the data to the discriminator 14.

The frequency adjustor 11 is in the form of a digital filter capable of variably adjusting a filter coefficient in accordance with a coefficient setting data Dcnt fed from the controller 15, performs a digital filtering treatment of the audio data Dauo, and supplies a digital-filtered audio data to the amplifier 12. Namely, the frequency adjuster 11 is a digital filter capable of variably adjusting a frequency character (propagation function) in accordance with the coefficient setting data Dcnt.

The amplifier 12 is provided to convert an audio data Daux into an analogue audio signal Saux, amplify and then supply the converted signal to the speaker 13.

Although Fig. 1 shows only one speaker 13, it is also possible to provide a plurality of speakers. Namely, since the frequency character adjuster 11 and the amplifier 12 are associated with a multi-channel audio reproducing system, a plurality of speakers may be connected to the multi-channel output terminals (not shown) of the amplifier 12, thereby making it possible to perform a stereo reproduction, as well as multi-channel reproductions involving at least 3 channels such as 5.1 channels of Dolby digital system and 7.1 channels of MPEG-2 system.

Namely, when a multi-channel data Din is fed from the reproducing section 8 to the demodulator/decoder 10, and a multi-channel audio stream is separated by virtue of the demodulator/decoder 10, as well as the multi-channel audio data Dauo is produced, the frequency character adjustor 11 will digital filter the multi-channel audio data Dauo and supply the digital-filtered multi-channel data Daux to the amplifier 12. Then, the amplifier 12 converts the multi-channel audio data Daux into multi-channel audio signal Saux and supplies the same to various speakers, thereby effecting stereo reproduction or multi-channel reproduction.

The discriminator 14 operates to inspect the attribute data DATRT (of each audio stream) fed from the demodulator/decoder 10 so as to discriminate the attribute of each audio stream. Then, a discrimination data Ds (indicating that an audio stream has been discriminated) is fed to the controller 15. For example, when DVD-ROM is reproduced, the audio stream attribute table VTS-AST-ATRT supplied as an attribute data DATRT from the demodulator/decoder 10 is inspected. In this way, by inspecting ACM (Audio Coding Mode), Quantization/DRC, sampling frequency fs, number of audio channels, it is possible to discriminate the attribute of each audio stream and supply the discrimination data Ds (indicating the discrimination result) to the controller 15.

When other sort of information recording medium is reproduced, an inspection is made into an attribute data DATRT of each audio stream recorded in accordance with the same logical data constitution as the DVD-ROM, and then supplies the discrimination data Ds into the controller 15.

The controller 15 is in the form of a micro-processor (MPU) and can search in the standard data storing area 17 or the renewal data storing area 18 in accordance with the discrimination data Ds. In this way, it is possible to obtain a coefficient setting data Dcnt corresponding to the discrimination data Ds and supply the same to the frequency character adjustor 11.

When the controller 15 produces a display data to the operation/display section 19, information concerning operation method and operation menu can be displayed on a displaying device (not shown) provided in the operation/display section 19. Further, upon operating the switches (not shown) provided in the operation/display section 19, the controller 15 can renew the coefficient setting data Dcnt of the renewal data storing area 18 in accordance with a user's instruction, so as to adjust a frequency character in the frequency character adjuster 11 in accordance with the coefficient setting data Dcnt.

The standard data storing area 17 is adapted to store in advance a plurality of standard coefficient setting datas Dcnt for adjusting the frequency characters in the frequency character adjustor 11. Further, the plurality of coefficient setting datas Dcnt are also recorded corresponding to discrimination result information contained in the discrimination data Ds. In this way, once the controller 15 operates to search in the standard data storing area 17 in accordance with the discrimination data Ds, it is possible to obtain a specific coefficient setting data Dcnt corresponding to the discrimination data Ds.

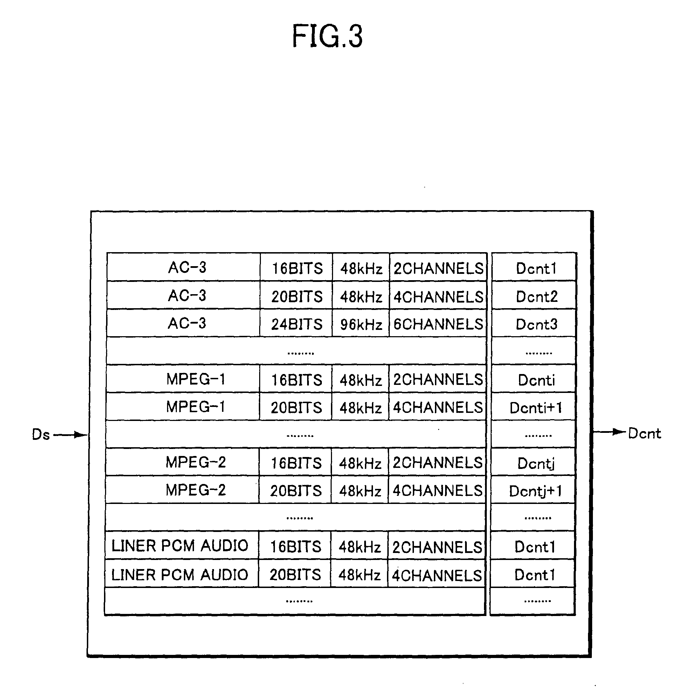

Fig. 3 shows a typical example of the standard data storing area 17 storing a plurality of coefficient setting datas Dcnt1, Dcnt2, Dcnt3 ..., corresponding to a combination including audio coding modes (AC-3, MPEG-1, MPEG-2, linear PCM audio, etc), Quantization/DRC (16 bits, 20 bits, 24 bits, etc.), sampling frequencies fs (48 kHz, 96 kHz, etc.) and the number of audio channels (monoral, 2 channels, 3 channels ...).

Then, search is carried out in accordance with the discrimination data Ds containing discrimination results including an audio coding mode (AC-3), Quantization/DRC (16 bits), a sampling frequency (48 kHz), and number of channels (2 channels). At this time, the coefficient setting data Dcnt (=Dcnt1) is outputted, thereby forming a reproducing mode in which the frequency character of the frequency character adjuster 11 has been adjusted in accordance with the coefficient setting data Dcnt 1. Further, once the search is carried out in accordance with the discrimination data Ds (including AC-3, 16 bits, 48 kHz, and 4 channels), the coefficient setting data Dcnt (=Dcnt2) is outputted, thereby forming a reproducing mode in which the frequency character of the frequency character adjuster 11 has been adjusted in accordance with the coefficient setting data Dcnt 2. Similarly, when a coefficient data Dcnt corresponding to a discrimination data Ds is outputted, it is allowed to obtain a reproducing mode in which the frequency character of the frequency character adjuster 11 has been adjusted in accordance with a coefficient setting data Dcnt.

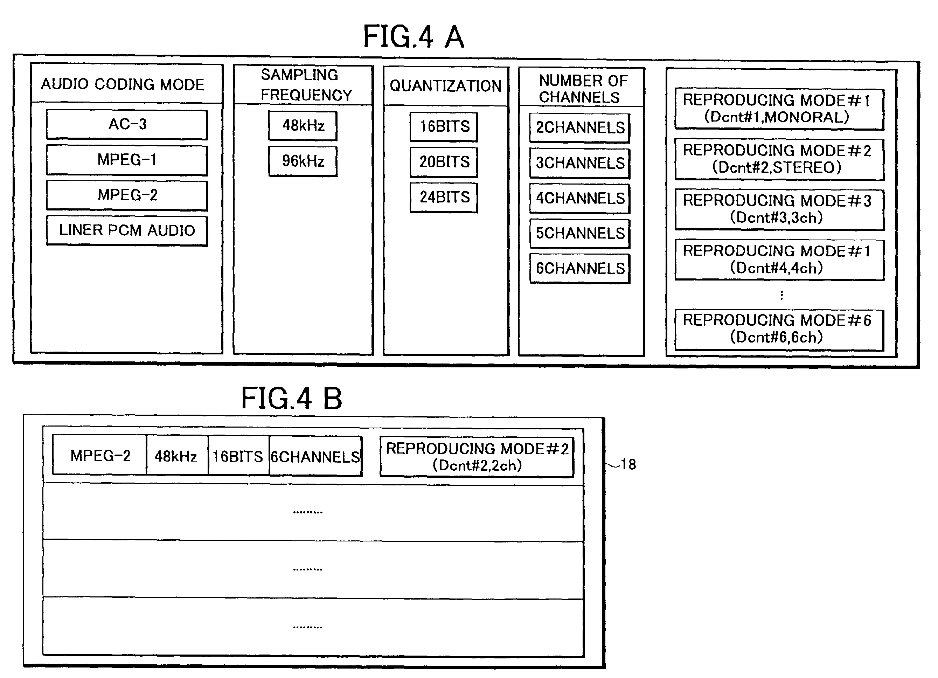

The renewal data storing area 18 is provided so that a user can operate the operation/display section 19 so as to store a desired coefficient setting data Dcnt in the renewal data storing area 18. When a user operates the operation/display section 19 to input a request for setting a desired frequency character, the controller 15 operates the operation/display section 19 to display the attribute contents of audio streams shown in Fig. 4A, as well as a plurality of reproducing modes. When a user gives an instruction to select a desired attribute content of an audio stream as well as a desired reproducing mode, the user's selected attribute content of an audio stream and the user's selected reproducing mode can be stored in the renewal data storing area 18.

For example, when a user selects (as the attribute contents of audio streams) PPEG-2, 48 kHz, 16 bits, and 6 channels from the displayed menu shown in Fig. 4A, and also selects a reproducing mode #2, the data (PPEG-2, 48 kHz, 16 bits, and 6 channels) and data of reproducing mode #2 (Dcnt #2, 2 channels) will be stored as renewal data in the renewal data storing area 18, as shown in Fig. 4B.

In this way, when a user selects a reproducing mode, and when the contents of discrimination data Ds have become (PPEG-2, 48 kHz, 16 bits, and 6 channels), the frequency character of the frequency character adjustor 11 will be adjusted in accordance with a coefficient setting data Dcnt #2 of the reproducing mode #2. Moreover, even if a discrimination result of channel number of discrimination data Ds is 6 channels, it is still possible to use left and right front speakers to effect stereo reproduction, by virtue of channel number data (2 channels) of reproducing mode #2.

Therefore, if two front speakers (left and right) are connected to the amplifier 12 to establish a speaker system for effecting stereo reproduction, and if an audio stream having an attribute of 2 channels is reproduced, it is possible to perform an On/Off control which actuates only the left and right front speakers of the 2-channel system but does not actuate the remaining speakers.

Furthermore, the renewal data storing area 18 is also allowed to store a plurality of renewal datas.

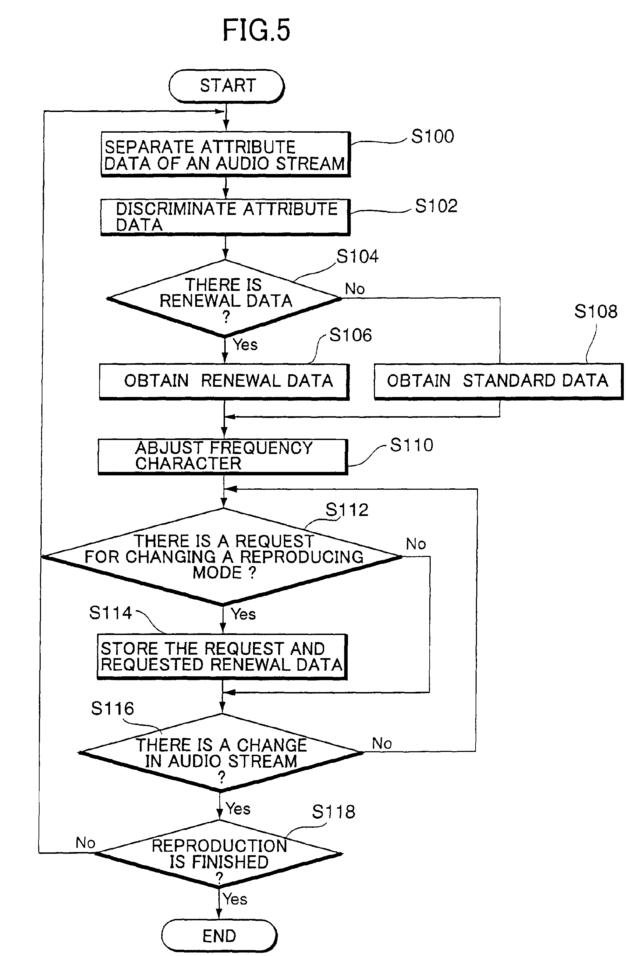

An operation of the audio reproducing apparatus will be described below with reference to a flow chart shown in Fig. 5.

As shown in the flow chart, when an information recording medium is reproduced in the reproducing section 8 and optically reproduced data is supplied to the modulator/decoder 10, the modulator/decoder 10 will separate an attribute data DATRT of each audio stream from the reproduced data (step S100). Then, the discrimination section 14 operates to discriminate the attribute data DATRT and supplies a discrimination data Ds to the controller 15 (step S102).

At the step S104, the controller 15 operates to search in the renewal data storing area 18 and to inspect whether or not a renewal data corresponding to the discrimination data Ds has been stored therein. If the renewal data has already been stored, the process goes to step S106 to obtain the renewal data from the renewal data storing area 18. Afterwards, the process goes to step S110. On the other hand, if the renewal data has not been stored in the renewal data storing area 18, the process goes to step S108 to inspect whether or not a standard data (corresponding to the content of the discrimination data Ds) has been stored in the standard data storing area 17. If the standard data has been stored in the standard data storing area 17, the standard data is then obtained from the standard data storing area 17 and the process goes to step S110. On the other hand, if it is found in the step S108 that standard data (corresponding to the content of the discrimination data Ds) has not been stored in the standard data storing area 17, the most common standard data is then obtained from the standard data storing area 17 and the process goes to step S110.

In this way, once a renewal data or a standard data is obtained, the controller 15 operates to supply a coefficient setting data Dcnt (contained in the renewal data or the standard data) to the frequency character adjustor 11, so as to adjust the frequency character to a desired reproducing mode based on the coefficient setting data Dcnt, thereby making it possible to obtain a desired sound field corresponding to the attribute of a selected audio stream.

Subsequently, at step S112, it is inspected whether or not there is a request (for changing the contents of the renewal data storing area 18) sent hereto from a user through the operation/display section 19. If there is such a request, the request and desired renewal data are stored in the renewal data storing area 18 at the step S114. Further, the controller 15 operates to supply the coefficient setting data Dcnt (contained in the renewal data) to the frequency character adjustor 11, so as to adjust the frequency character to a desired reproducing mode based on the coefficient setting data Dcnt. Then, the process goes to step S116.

On the other hand, at step S112, if there is not a request (for changing the contents of the renewal data storing area 18) sent hereto from a user through the operation/display section 19, the operation at step 114 is not executed so that the process goes to the step S116.

At step S116, the discriminator 14 operates to inspect whether or not there is a change in audio stream. If there is not such a change, the operations from the step S112 are repeated. If there has occurred such a change, it is inspected at step S118 whether there is an instruction (for ending the reproduction) from the user. If there is not such an instruction, the operations from the step S100 are repeated so as to continue the audio reproduction.

In this way, in use of the audio reproducing apparatus formed according to the present invention, the attribute of each audio stream is inspected and a sound field suitable for this attribute is set, thereby effecting a desired audio reproduction in a suitable sound field environment. In this way, a user can enjoy his or her desired music in a sound field suitable for a selected audio stream. Further, even if an appropriate sound field is not set in advance for each audio stream, it is possible to automatically determine the attribute of each audio stream so as to automatically set an appropriate sound field suitable for a selected audio stream. As a result, a user is allowed not to perform a troublesome operation, thereby ensuring an improved convenience.

Further, since it is possible to store renewal data (for setting a user's desired reproducing mode) in the renewal data storing area 18, it has become possible to set a user's desired reproducing mode suitable for an attribute of a reproduced audio stream. For example, if an attribute of channel number of an audio stream is 6 channels, and if a renewal data of 2-channel reproducing mode is stored, 6-channel audio stream can be reproduced by the 2-channel reproducing mode. In this way, when a plurality of speakers are connected to the audio reproducing apparatus, it is possible to obtain an effect of realizing an appropriate sound field corresponding to the number of speakers.

According to the present invention, an attribute of each audio stream is inspected and a sound field suitable for this attribute is set, thereby effecting a desired audio reproduction. Therefore, it becomes possible to provide a user with a sound field environment suitable for a selected audio stream. Further, even if an appropriate sound field is not set in advance for each audio stream, it is possible to automatically discriminate an attribute of each audio stream so as to automatically set an appropriate sound field suitable for a selected audio stream. As a result, a user is allowed not to perform a troublesome operation, thereby ensuring an improved convenience.

While the invention has been described in conjunction with preferred specific embodiment thereof, it will be understood that this description is intended to illustrate and not limit the scope of the invention, which is defined by the following claims. Further, it should be understood that the present invention refers also to a method of audio reproduction.

## Claims

1. An audio reproducing apparatus comprising:
an audio reproducing device (8) for reproducing audio information;
a discriminating device (14) for discriminating sound stream contained in the audio information;
a storing device (16) for storing frequency character information set corresponding to the sound stream;
a renewing device (15) for renewing the frequency character information; and
a control device (15) which can perform a control so that the renewing device can be changed in accordance with a frequency character corresponding to a sound stream discriminated by the discriminating device (14), and that the audio reproducing device (8) can output an audio information.

2. An audio reproducing apparatus according to claim 1, further comprising:
character storing device (16) for storing a plurality of frequency character informations; and
selecting device (15) for selecting a sound field corresponding to frequency character information stored in the character storing device;
wherein the control device (15) is provided such that a sound field selected by the selecting device is stored in the character storing device, corresponding to a sound stream.

3. An audio reproducing apparatus according to claim 1 or 2, wherein the discriminating device (14) is provided to discriminate, as a sound stream, one or more of audio coding mode, quantization, sampling frequency and the number of audio channels.

4. An audio reproducing apparatus according to any one of claims 1 to 3, wherein the discriminating device (14) is adapted to effect an On/Off control of speakers, in accordance with an attribute of an audio stream.
